Europäisches Patentamt

European Patent Office

Office européen des brevets

(19)

(11) Publication number: **0 038 684**
**B1**

(12) **EUROPEAN PATENT SPECIFICATION**

(45) Date of publication of patent specification: **25.07.84**

(21) Application number: **81301689.6**

(22) Date of filing: **16.04.81**

(51) Int. Cl.³: **A 23 L 1/32, A 23 L 1/19,
A 23 L 1/187**

(54) Food additive.

(30) Priority: **21.04.80 AU 3204/80**

(43) Date of publication of application:
**28.10.81 Bulletin 81/43**

(45) Publication of the grant of the patent:
**25.07.84 Bulletin 84/30**

(84) Designated Contracting States:
**AT BE CH DE FR GB IT LI LU NL SE**

(56) References cited:
**EP - A - 0 012 490
DE - B - 2 406 376
GB - A - 1 194 941
GB - A - 1 463 113
US - A - 3 219 457
US - A - 4 200 663**

(73) Proprietor: **PAVLOVA PANTRY MARKETING PTY.
LIMITED**
**Suite 12 Ramsgate Plaza 191 Ramsgate Road
Ramsgate New South Wales (AU)**

(72) Inventor: **Hillier, Harold Allen**
**16 Primrose Avenue
Dolls Point New South Wales (AU)**

(74) Representative: **Brock, Peter William et al,
Michael Burnside & Partners 2 Serjeants' Inn Fleet
Street
London EC4Y 1HL (GB)**

Courier Press, Leamington Spa, England.

**Description**

The present invention relates to an additive for improving the whipping properties of an egg-containing food, and to egg-containing products including the additive.

In particular the additive is advantageous in the production of pavlovas. However, the additive has general utility with regard to the production of whipped or foamed egg-containing products in general, such as meringues, souffles, mousses, quiches, sponges, milk shakes, foamed coffee products, and foamed cheese cakes.

A pavlova mix is known from Australian Patent 515,130.

GB—A—1 463 113 discloses a process for preparing multi-layered desserts by whipping (e.g. for about 2 minutes at low speed) a combination of a cold aqueous liquid with a fat-free mixture of whippable dry protein, cold water-soluble gelatin powder, roll-dried starch, and sweeteners. On standing the whipped mixture solidifies into two or more layers, the upper layer having a fluffy chiffon texture, and the lower layer or layers being similar in texture to a gelatin and/or starch dessert.

Domestically and commercially, egg is generally incorporated into food receipes as either unpasteurised or pasteurised liquid egg white, or as powdered egg (i.e. albumen). On account of its superior whipping properties, unpasteurised liquid egg is generally to be preferred. It usually requires the least whipping and produces the most satisfactory product. However, due to stricter health regulations, the use of pasteurised liquid egg, which has inferior whipping properties, is becoming more widespread. Typically, longer whipping times are required than with pasteurised liquid egg, thus leading to greater production costs.

Furthermore, although liquid egg white is preferred for use in whipped egg-containing products, despite controls, the whipping properties of commercially available liquid egg vary quite considerably. The whipping properties of the egg white depend to a large extent on the size of egg, its freshness, moisture content and other factors — so that it is difficult for the housewife to produce domestically pavlovas or other egg-containing products of consistent quality.

It is an object of the present invention to mitigate these problems, and also to allow the production of a variety of dry pack whipped egg products.

It has now been discovered that the addition of an edible acid, for example citric acid, to the egg white significantly improves its whipping properties.

One aspect of the present invention provides an egg-containing dry mix for reconstitution with water and whipping to produce a stable whipped product, which is cookable to form a homogeneous cooked egg-containing food product comprising

(a) an additive comprising
　　2 to 5 parts by weight of a whipping protein selected from milk protein and vegetable protein (e.g. a soybean-derived protein);
　　1 to 5 parts by weight of a thickening agent selected from alginates and carageenans (e.g. propylene glycol alginate);
　　1 to 10 parts by weight of a solid edible acid selected from citric acid, tartaric acid, and ascorbic acid;
　　up to 5 parts by weight gelatin;
　　up to 20 parts by weight cornflour; and
　　up to 20 parts by weight glucose; and
(b) albumen.

Preferably, the additive and the albumen are present in a weight ratio from 1:1.5 to 1:4.0.

Although not essential, the additive generally also includes gelatin for further thickening. In order to assist blending of the ingredients, the additive may further include cornflour or glucose.

The amount of additive added to a given amount of albumen will depend on many factors, including the particular food product being produced.

The dry mixture of additive albumen generally contains 20 to 40 wt. % of additive (i.e. the ratio of additive to albumen is 1:1.5 to 1:4.0).

The term "whipping protein" is a term well known to the man skilled in this art and indicates a protein with good whipping and foaming characteristics. Preferred whipping proteins are derived either from milk or vegetable protein e.g. from soybeans. Hyfoama CR is a typical milk-derived aerating and foaming agent, which is produced by the hydrolysis of milk protein and spray-dried with maltose. Typically, Hyfoama CR has a protein content of 35%, a moisture content of 5% an ash content of 6%, a carbohydrate content of 43%, and a vegetable stabiliser content of 10%. Other possible whipping agents include Hyfoama DS, 88 and 86, and Stauffer Enpro 50. (Hyfoama and Enpro are trade marks).

The Gunther (trade mark) series are typical of whipping proteins derived from soybeans. The spray dried powders are derived from soybeans by chemical extraction of the protein, followed by purification and enzyme modification. The Gunther D-series comprises the D-100, D-157A and D-100 WA whipping proteins. The D-100 product is particularly preferred and comprises a protein content of 62 parts by weight, a moisture content of 4 parts by weight, a carbohydrate content of 16 parts by weight, an ash content of 18 parts by weight, and a sodium hexametaphosphate content of 9.5 parts by weight.

The amounts of whipping protein referred to in the specification relate to quantities of such commercially available whipping protein formulations. The whipping proteins improve the aerating efficiency of egg albumen.

The thickening agent is used for stabilising and thickening the whipped product. It has been found necessary to use a sea-weed derived thickening agent, i.e. an alginate (e.g. sodium or calcium alginate) or a carageenan. Other kinds of known thickening agents have been found to be less effective. Preferably, the propylene glycol esters of alginic acid are employed. Suitable products are available under the trade mark "Kelcoloid". The product Kelcoloid HVF is of high viscosity, Kelcoloid LVF is of lower viscosity and Kelcoloid S is an extra low viscosity product. Kelcoloid LVF is preferred in the present invention. Suitable carageenans are sold under the trade mark Genugel.

Depending on particular applications, the additive or the egg-containing formulation may also comprise known ingredients for particular applications such as starch, gelatin, vegetable gum (such as Kelco GFS), preservatives and flavouring. The vegetable gum may be guar gum or xanthan gum or mixtures thereof.

The edible acid is selected from certain known edible acids and is preferably citric acid. However, it is also possible to use tartaric acid or ascorbic acid.

The additive of the present invention is particularly useful in the production of pavlovas. A pavlova is similar to a meringue but, whilst being crisp on the outside, generally has a centre which is fairly soft and chewy. In the past, pavlovas have generally been made from a mixture of liquid egg white, sugar, cornflour, and vanilla. In contrast, a pavlova produced according to an embodiment of the present invention would comprise albumen, sugar, whipping protein, thickening agent, edible acid and flavouring.

Use of the additive according to the present invention not only allows the whipping time to be reduced and consistent results to be achieved, but also the foamed product is more stable and can be allowed to stand in the whipped state for a longer period without flopping before it is cooked. A whipped mix produced according to conventional techniques can generally only be left to stand for 10 to 15 minutes before cooking, whereas the whipped mixture produced using the additive of the present invention can sit for 30 minutes or longer without flopping. Times of 45—60 minutes are usual.

In addition, the volume of whipped product produced according to the present invention may be greater than that volume produced by conventional techniques, e.g. by up to 20%, and the bubble size may be more consistent. Often the amount of egg used may be reduced when using the additive.

Furthermore it has surprisingly now been found feasible to whip the egg-white — presence of other ingredients, such as sugar, when the additive is used, which was hitherto generally not possible.

These advantages considerably assist the commercial production of whipped egg products and necessitate less equipment e.g. mixers. The shorter and more consistent mixing times obtained when using the additive of the present invention make the use of continuous mixing apparatus a practical possibility. Moreover, the additive facilitates the use of dry powder mixtures rather than liquid materials. Liquid egg must be refrigerated, has a limited life and is bulky and awkward to handle.

The use of the additive makes possible the introduction of a variety of commercially viable dry package "instant" powder mixtures for products not previously available from supermarkets, for example:

### 1. Pavlova

The weight of albumen plus additive required for a domestic pavlova is 20 to 30 gm. This amount is inconveniently small.

It has been found that 100 gm to 150 gm of sugar can be added to the dry mix to give a package of practical size, without adversely affecting the whipping properties of the albumen.

When this total dry mix is added to water in a ratio of 1:5 to 1:7 and whipped, the whipping time is reasonable (3—8 minutes depending on type of mixer) and the whipped product is of good quality. A further quantity of 100—150 gm sugar is added and the product cooked to produce a good quality pavlova most suitable for domestic use.

### 2. Souffle

This product has 3 major components viz.
Sauce,
Filling, flavouring etc, and
Egg White Foam.

In the domestic situation the product has a reputation for high failure rate similar to Pavlova. Failure is often due to the inability of the egg white foam to retain its trapped air.

The use of additive with the egg white strengthens the foam and gives a consistently good result in both the cooked and uncooked varieties of souffle.

The instant dry mix package for Souffle will generally comprise 2 packets.

| Sweet souffle | Pack 1 |
|---|---|

(Cooked)    Flour, dried milk, dried egg yolk & fats, dry flavourings.

This powder mix is combined with water and gently heated and stirred to produce a smooth creamy sauce. Solid fillings are then mixed into the sauce.

| Pack 2 |
|---|

Albumen, Additive and Sugar

This powder mix is combined with water and whipped to produce a strong stable foam. The foam is then folded into the sauce and the mixture cooked in a souffle dish.

For an uncooked sweet souffle, pack 1 will include gelatin and/or vegetable gum and the mixture of sauce and foam would be set in the refrigerator.

| Savoury souffle | Pack 1 |
|---|---|

Flour, dried milk, dried egg yolk, fats, dry flavourings and spices.

| Pack 2 |
|---|

Albumen plus a higher percentage of additive to ensure stable foam.

Operations as for sweet souffle, both cooked and uncooked.

3. Baked Alaska Flambe

This product consists of 3 layers viz.

A white cake base,
Ice cream or frozen yoghurts, and
Egg white foam with sugar (meringue).

The ice cream is mounded on top of the cake base and the egg white foam applied as a cover over both. The product is then frozen. Prior to serving the egg white foam is browned in a hot oven for 3—5 minutes. Then hot brandy is poured over the top and the product is flamed with a spectacular effect to make a sweet dessert with a hot outer skin and a frozen interior.

Thus the success of the product depends on the insulating properties of the egg white foam and its stability during handling, freezing and cooking cycles. This product can also be presented as an instant mix in 2 packs—

Pack 1 Ingredients for the white cake
Pack 2 Albumen, additive and sugar

Without the egg white package the product requires 8 to 10 egg whites which prohibits its use in most households.

4. Mousse

This consists of a puree of fruit or vegetable to which is added cream and gelatin and then combined with an egg white foam and set in the refrigerator to produce a jellied foam. Albumen powder with additive ensures that this product has maximum aeration and stability.

5. Meringue

The mixture for this product is similar to pavlova, but with less water and a higher sugar content. The product is cooked at a lower temperature for a longer time, to produce a crunchy dry sweet product which can be coloured and flavoured during mixing. The pavlova mixture with less water and more sugar can be used to produce this product.

Also, the invention enables a dry packaged product containing powdered egg to be produced for sale in supermarkets as a convenience food for domestic use.

Embodiments of the present invention will now be illustrated in the following Examples. All percentages are by weight.

Example 1

Table 1 illustrates the production of 3 samples of additive according to the present invention. The additive is formulated by dry mixing the five ingredients so as to form a homogenous mixture.

For domestic use, dry mixes made up of albumen powder and additive are prepared by incorporating the parts by weight of albumen shown in Table 1. These dry mixes are suitable for the production of pavlovas or other whipped foods according to the consumers requirements. Example 2 illustrates the use of such a dry mix to produce pavlovas.

### TABLE 1
Additive/dry mix

| Additive | parts by weight (pbw) | | |
|---|---|---|---|
| Gunther D100 | 3 | 3 | 4 |
| Kelcoloid LVF | 2 | 3 | 4 |
| Gelatin | 3 | 4 | 4 |
| Citric Acid | 2 | 3 | 4 |
| Cornflour plus glucose | 10 | 13 | 14 |
| Albumen powder pbw to make up dry mix | 80 | 75 | 70 |
| pbw total | 100 | 100 | 100 |

Example 2

This example shows the production of pavlovas from the additive and dry mix recipes produced in Example 1. Table 2 shows the amount of ingredients for four 10″ pavlovas.

The additive, albumen powder and about half of the sugar are mixed with water and whipped in a Hobart beater until the whipped mixture has attained its maximum volume. The whipping time is 3 to 5 minutes. Then, the remaining castor sugar is gently added to the mixture whilst the mixture is whipped. The mixture is then preferably cooked with $\frac{1}{2}$ hour in a medium to cool oven.

### TABLE 2
Pavlova recipe

| | Albumen — nominal percent by wt of dry mix | | |
|---|---|---|---|
| | 80 | 75 | 70 |
| Albumen (dry) grams | 120 | 113 | 105 |
| Additive grams | 30 | 37 | 45 |
| Water ml | 1100 | 1100 | 1100 |
| Castor Sugar grams | 1800 | 1750 | 1800 |

In Examples 1 and 2 the use of dry powdered albumen reconstituted with water has been illustrated. However, as mentioned previously, pasteurised and unpasteurised liquid egg may be used and the proportions of additive reduced accordingly. Examples 3 and 4 illustrate additives which have been specially designed for use with liquid egg and albumen, respectively.

Example 3

An additive, designated Type B, was developed for use with glucose-free dried egg white (i.e. albumen) and contains

| | |
|---|---|
| Glucose | 25% |
| Vegetable gum | 12.5% |
| Kelcoloid LVF | 11.25% |
| Gunther D100 or D157A | 15.0% |
| Edible acid | 11.25% |
| Cornflour | 25% |

The glucose replaces that lost from the albumen during its spray drying preparation. The edible acid is usually citric acid.

The additive is mixed with albumen so that it usually constitutes from 20 to 40% of the dry powder mixture. The dry powder mixture is then combined with water in a ratio of 6 to 7 parts by wt. water:1 part of dry powder.

The Type B additive is particularly useful for domestic albumen — containing products including pavlova mix, meringue, mix, souffle egg foam mix, mousse egg foam mix, baked Alaska egg foam mix, and chiffon pie mix.

Some specific recipes are now given in the following Examples.

5

Example 4
Domestic pavlova — instant powder mix (1×6 serves)

| Albumen | 15 gm | |
|---|---|---|
| Additive Type 'B' | 6 gm | Mix together, then whisk to a stable |
| Sugar | 120 gm | foam for approx. 2—3 mins. |
| Water | 150 ml | |

| Sugar | 130 gm | With the mixer on slow speed add sugar and whisk for 1 min. |
|---|---|---|

Bake at 150°C for 30—40 mins.

Example 5
Souffle egg white foam — instant powder mix

| Flour | 45 gm | |
|---|---|---|
| Butter | 45 gm | |
| Milk | 300 ml | Mix, heat and stir to a smooth creamy sauce |
| Egg Yolk Powder | 70 gm | |
| Water | 70 ml | |

| Cheese | 100 gm | |
|---|---|---|
| Seasonings | | Mix into sauce |
| Onion | | |

| Albumen | 16 gms | |
|---|---|---|
| Additive 'B' | 8 gms | Whisk to a stiff foam |
| Water | 150 ml | |

Fold the foam into the sauce

Bake at 200°C for 30 minutes.

Example 6
The Example illustrates dry powder albumen mixes formulated to produce whipped egg white suitable for various purposes:

| | Albumen | Additive B | Required water: powder ratio |
|---|---|---|---|
| dry pavlova | 15 g | 6 g | 7:1 |
| meringue | 16 g | 8 g | 6:1 |
| egg white foam | 15 g | 7.5 g | 7:1 |

Comparative Tests 1 — foam stability
In order to demonstrate the superior whipping properties of egg white to which additive had been added, the following tests were carried out into the stability of the foam. The ingredients a to c were whipped and a 150 mm high mount of the foam produced was allowed to stand on a metal surface. During standing, the foam degrades to form a liquid film between the foam and the metal, so allowing the foam to slide over the metal surface. The times given represent the times before the foam degrades enough to allow sliding to occur. A long time thus indicates a very stable foam.

| | Time — mins. |
|---|---|
| a) 160 ml unpasteurised liquid egg white | 9 |
| b) 20 g albumen with 140 ml water | 11 |
| c) 15 g albumen, 6 g additive B, 150 ml water | 45 |

The standing times for the whipped egg white containing additive (tests c and d) were very much longer than when the additive was absent.

Comparative Test 2 — whipping time

Pavlovas were produced by 1) whipping the egg white and 2) whipping 270 g sugar in before cooking.

|  | Whipping time for 1) | Density | Whipping time for 2) | Density |
|---|---|---|---|---|
| a) 20 g albumen, 140 ml water | 3 min. | 0.083 | 3 min. | 0.300 |
| b) 17.5 g albumen, 2.5 g glucose 140 ml water | 3 | 0.096 | 2.5 | 0.269 |
| c) 17 g albumen, 2 g glucose, 1 g Kelco GFS gum, 140 ml water | 3 | 0.093 | 2.5 | 0.283 |
| d) 16 g albumen, 1.2 g Kelcoloid LVF, 1.2 g citric acid, 1.6 g Gunther D100, 140 ml water | 2 | 0.087 | 1.5 | 0.178 |
| e) 15 g albumen, 6 g additive B, 145 ml water | 2 | 0.094 | 1.5 | 0.204 |

Thus, egg whipped with the additive (samples d and e) took significantly less time to whip (and achieved a slightly lower density — i.e. higher aeration) than samples a, b and c without the additive. The whipping times were reduced in both stages 1 and 2.

**Claims for Contracting States: GB, BE, FR, DE, IT, LU, NL, SE, CH, (LI)**

1. An egg-containing dry mix for reconstitution with water and whipping to produce a stable whipped product, which is cookable to form a homogeneous cooked egg-containing food product; characterized in that it comprises

(a) an additive comprising
   2 to 5 parts by weight of a whipping protein selected from milk protein and vegetable protein;
   1 to 5 parts by weight of a thickening agent selected from alginates and carageenans;
   1 to 10 parts by weight of a solid edible acid selected from citric acid, tartaric acid, and ascorbic acid;
   up to 5 parts by weight gelatin;
   up to 20 parts by weight cornflour; and
   up to 20 parts by weight glucose; and
(b) albumen.

2. A dry mix according to Claim 1 characterized in that it further comprises supplemental ingredients so as to be suitable for the production of a homogenous whipped cooked egg-containing food product selected from pavlova, souffle, baked Alaska, meringue, and sponge cake.

3. A dry mix according to Claim 1 or 2 characterized in that the thickening agent is propylene glycol alignate.

4. A dry mix according to any preceding claim characterized in that the whipping protein is a soybean-derived protein.

5. A dry mix according to any preceding claim characterized in that the additive and the albumen are present in a weight ratio from 1:1.5 to 1:4.0.

**Claims for the Contracting State: AT**

1. A process for the preparation of an egg-containing dry mix that can be reconstituted with water and whipped to produce a stable whipped product, which is cookable to form a homogeneous cooked egg-containing food product; characterized in that said process comprises mixing

(a) an additive mixture comprising
   2 to 5 parts by weight of a whipping protein selected from milk protein and vegetable protein;
   1 to 5 parts by weight of a thickening agent selected from alginates and carageenans;

7

to 10 parts by weight of a solid edible acid selected from citric acid, tartaric acid, and ascorbic acid;

up to 5 parts by weight gelatin;

up to 20 parts by weight cornflour; and

up to 20 parts by weight glucose; with

(b) albumen.

2. A process according to Claim 1 characterized in that supplemental ingredients are included so that the dry mix prepared is suitable for the production of a homogenous whipped cooked egg-containing food product selected from pavlova, souffle, baked Alaska, meringue, and sponge cake.

3. A process according to Claim 1 or 2 characterized in that the thickening agent is propylene glycol alignate.

4. A process according to any preceding claim characterized in that the whipping protein is a soybean-derived protein.

5. A process according to any preceding claim characterized in that the additive and the albumen are mixed in a weight ratio from 1:1.5 to 1:4.0.

**Patentansprüche für die Vertragsstaaten: BE, CH, DE, FR, GB, IT, LI, LU, NL, SE**

1. Eihaltige Trockenmischung zum Rekonstituieren mit Wasser und Schlagen zur Bildung eines stabilen Schlag-bzw. Schneeproduktes, das unter Bildung eines homogenen gekochten eihaltigen Nahrungsmittelproduktes kochbar ist, dadurch gekennzeichnet, daß es umfaßt:

a) ein Additive enthaltend

2 bis 5 Gewichtsteile eines Schalgproteins ausgewählt aus Milchprotein und pflanzlichem Protein;

1 bis 5 Gewichtsteile eines Verdickungsmittels ausgewählt aus Alginaten und Carrageenanen;

1 bis 10 Gewichtsteile einer festen eßbaren Säure ausgewählt aus Citronensäure, Weinsäure und Ascorbinsäure;

bis zu 5 Gewichtsteile Gelatine;

bis zu 20 Gewichtsteile Getreidemehl

bis zu 20 Gewichtteile Glucose; und

b) Eiweiß.

2. Trockenmischung gemäß Anspruch 1, dadurch gekennzeichnet, daß sie weiters ergänzende Bestandteile aufweist, um für die Bildung eines homogenen geschalgenen gekochten eihaltigen Nahrungsmittelproduktes ausgewählt unter Pavlova, Soufflé, gebackenem Alaska, Baiser und Biskuitkuchen geeignet zu sein.

3. Trockenmischung gemäß Anspruch 1 oder 2, dadurch gekennzeichnet, daß das Verdickungsmittel Propylenglykolalginat ist.

4. Trockenmischung gemäß einem der vorhergehenden Ansprüche, dadurch gekennzeichnet, daß das Schlagprotein ein von Sojabohnen stammendes Protein ist.

5. Trockenmischung gemäß einem der vorhergehenden Ansprüche, dadurch gekennzeichnet, daß das Additiv und das Eiweiß in einem Gewichtsverhältnis von 1:1,5 bis 1:4,0 anwesend sind.

**Patentansprüche für den Vertragsstaat: AT**

1. Verfahren zur Herstellung einer eihaltigen Trockenmischung, die mit Wasser rekonstituiert und zur Bildung eines stabilen Schalg-bzw. Schneeproduktes, das unter Bildung eines homogenen gekochten eihaltigen Nahrungsmittelproduktes kochbar ist, geschlagen werden kann, dadurch gekennzeichnet, daß dieses Verfahren das Mischen

a) einer Additivmischung enthaltend

2 bis 5 Gewichtsteile eines Schalgproteins ausgewählt aus Milchprotein und pflanzlichem Protein;

1 bis 5 Gewichtsteile eines Verdickungsmittels ausgewählt aus Alginaten und Carrageenanen;

1 bis 10 Gewichtsteile einer festen eßbaren Säure ausgewählt aus Citronensäure, Weinsäure und Ascorbinsäure;

bis zu 5 Gewichtsteile Gelatine;

bis zu 20 Gewichtsteile Getreidemehl; und

bis zu 20 Gewichtsteile Glucose; mit

b) Eiweiß umfaßt.

2. Verfahren gemäß Anspruch 1, dadurch gekennzeichnet, daß ergänzende Bestandteile inkludiert werden, so daß die hergestellte Trockenmischung für die Bildung eines homogenen geschalgenen gekochten eihaltigen Nahrungsmittelproduktes ausgewählt unter Pavlova, Soufflé, gebackenem Alaska, Baiser und Biskuitkuchen geeignet ist.

3. Verfahren gemäß Anspruch 1 oder 2, dadurch gekennzeichnet, daß das Verdickungsmittel Propylenglykolalginat ist.

4. Verfahren gemäß einem der vorhergehenden Ansprüche, dadurch gekennzeichnet, daß das Schlagprotein ein von Sojabohnen stammendes Protein ist.

5. Verfahren gemäß einem der vorhergehenden Ansprüche, dadurch gekennzeichnet, daß das Additiv und das Eiweiß in einem Geichtsverhältnis von 1:1,5 bis 1:4,0 gemischt werden.

**Revendications pour les Etats Contractants: BE, CH, DE, FR, GB, IT, LI, LU, NL, SE**

1. Mélange sec à base d'oeuf destiné à la réalisation par reconstitution avec de l'eau et battage, d'un produit battu stable, susceptible d'être cuit pour former un produit alimentaire à base d'oeuf cuit homogène, caractérisé en ce qu'il comprend:

a) un additif comportant
— 2 à 5 parts en poids de protéine moussante choisie parmi les protéines lactiques et les protéines végétales;
— 1 à 5 parts en poids d'agent épaississant choisi parmi les alginates et les extraits d'algues rouges;
— 1 à 10 parts en poids d'un acide comestible solide choisi parmi l'acide citrique, l'acide tartrique et l'acide ascorbique;
— jusqu'à 5 parts en poids de gélatine;
— jusqu'à 20 parts en poids de farine de maïs et
— jusqu'à 20 parts en poids de glucose; et
b) de l'albumen.

2. Mélange sec selon la revendication 1, caractérisé en ce qu'il comprend en outre les ingrédients supplémentaires afin de la rendre convenable pour la réalisation de produits alimentaires cuits, battus et homogènes à base d'oeuf, choisis parmi la pavlova, le soufflé, l'omelette norvégienne, la meringue et le gâteau de Savoie.

3. Mélange sec selon l'une des revendications 1 ou 2, caractérisé en ce que l'agent épaississant est un alginate propylène glycol.

4. Mélange sec selon l'une des revendications 1 à 3, caractérisé en ce que la protéine moussante est une protéine dérivée du soja.

5. Mélange sec selon l'une des revendications 1 à 4, caractérisé en ce que l'additif et l'albumen sont présents selon un rapport en poids compris entre 1:1,5 et 1:4.

**Revendications pour l'état Contractant: AT**

1. Procédé pour la préparation d'un mélange sec à base d'oeuf qui peut être reconstitué avec de l'eau et battu pour donner un produit battu stable, susceptible d'être cuit pour former un produit alimentaire à base d'oeuf cuit homogène, caractérisé en ce que l'on mélange

a) un additif comportant
— 2 à 5 parts en poids de protéine moussante choisie parmi les protéines lactiques et les protéines végétales;
— 1 à 5 parts en poids d'agent épaississant choisi parmi les alginates et les extraits d'algues rouges;
— 1 à 10 parts en poids d'un acide cosmétique solide choisi parmi l'acide citrique, l'acide tartrique et l'acide ascorbique;
— jusqu'à 5 parts en poids de gélatine;
— jusqu'à 20 parts en poids de farine de maïs; et
— jusqu'à 20 parts en poids de glucose; et
b) de l'albumen.

2. Procédé selon la revendication 1, caractérisé en ce qu'on ajoute en outre des ingrédients supplémentaires afin de rendre le mélange sec convenable pour la réalisation de produits alimentaires cuits, battus et homogènes à base d'oeuf, choisis parmi la pavlova, le soufflé, l'omelette norvégienne, la meringue et le gâteau de Savoie.

3. Procédé selon l'une des revendications 1 ou 2, caractérisé en ce que l'agent épaississant est un alginate propylène glycol.

4. Procédé selon l'une quelconque des revendications précédentes, caractérisé en ce que la protéine moussante est une protéine dérivée du soja.

5. Procédé selon l'une quelconque des revendications précédentes, caractérisé en ce que l'additif et l'albumen sont mélangés selon un rapport en poids compris entre 1:1,5 et 1:4.